# EUROPEAN PATENT APPLICATION

(11) **EP 1 229 507 A2**
(43) Date of publication of application: **07.08.2002**
(21) Application number: 02002236.4
(22) Date of filing: 30.01.2002
(51) Int. Cl.: G07F 7/10, G06F 17/60

(54) **Process providing out-of-store buying opportunity for products previously tried in reality**

(30) Priority: 31.01.2001 US 265660 P
(71) Applicant: Shaw, Jonathan, 1006 Lausanne (CH); Shaw, Gretchen, 1006 Lausanne (CH)
(72) Inventor: Shaw, Jonathan, 1006 Lausanne (CH); Shaw, Gretchen, 1006 Lausanne (CH)

(57) **Abstract**

An ordering process linking products tried or identified in a real world setting to the Internet, and possibly combined with a real world buying solution, is disclosed with a coding system, label, Internet site with an eventual order form. The coding system identifies the product and possibly the product price, inventory holder, retailer and/or other parties by assigning each element or party their own identification factor. The label can be detachable from the product and is equipped with the code. The Internet site is designed to accept the product code to order the product, and ensure proper profit sharing and goods delivery. A mobile device may be used in conjunction with the CODE to order the product in place of the Internet site or retail order form. Similarly, telephone, fax or Post mail may be used along with the CODE to place an order. An order form can be made available at the retail establishment to give consumers an immediate ordering opportunity. The process provides a new sales channel to retailers, distributors, manufacturers, designers, inventory holders, promoters and hospitality industries.

## Description

### Background of the Invention

Priority is claimed under the Paris Convention to U.S. patent application, serial no. 60/265,660, filed January 31, 2001.

This invention relates generally to the field of sales channels, and more particularly to a process, which gives consumers, an out-of-store centralized buying opportunity for products tried or discovered in the real world from multiple origins and/or sources.

Consumers are frequently faced with the very frustrating dilemma of trying a product in an on-trade retail environment, enjoying the product, but never finding it again. Consumers are also penalized when buying products in the off-trade sector, as they are not given a trial opportunity before purchasing. It is also true that consumers are informed by the media, or on the package of a product outside of a buying environment, of the existence of new products but do not know where or how they can actually buy those products.

The most widely used purchasing process for fragmented products is an off-trade retail channel. This channel includes a random selection of fragmented products available for purchase at various prices. The consumer enters the establishment and, either with recommendation or without, they select a product.

A second purchasing process for fragmented products is by mail order. The customer, upon receiving the catalog of products looks at the picture or text describing the product and makes their buying decision. The merchandise is then sent to them.

Yet another increasingly available purchasing method being developed today is purchasing via the Internet. This channel includes an Internet site with a product description and price, as well as any other pertinent information concerning the product. The consumer studies the product description, and then decides whether or not to place an order.

The previous pre-purchasing processes are deficient because they do not allow the consumer to try the product before purchasing. The consumer is forced to purchase a product that he may not be familiar with, and moreover, because the products are of a fragmented nature it is impossible for consumers to be familiar with all the products available. Specifically, concerning the Internet, consumers are often not able to find the product in the off-trade establishment or even the corresponding site to place an order. Furthermore, referring to the mail order approach, customers are often required to ask for the product catalog, or already be on the company's mailing list to even receive it. In addition, many customers receive the catalog who are not interested in the product, and thus the company wastes large amounts of money targeting the wrong customers.

### Summary of the Invention

The primary object of the invention is to provide a new sales channel to manufacturers, designers, retailers, inventory holders, promoters, catering and hospitality industries.

Another object of the invention is to provide manufacturers, designers, retailers, inventory holders, catering and hospitality industries a more efficient way to market to target customers.

Another object of the invention is to provide consumers with a more efficient way to purchase goods.

Another object of the invention is to make available to consumers products that are not normally available for home consumption.

Another object of the invention is to provide a central and readily accessible way to purchase products regardless of where they were tried or discovered.

Another object of the invention is to provide a profit distribution scheme for the benefit of key players in the value chain (i.e. manufacturer, inventory holder, retailer, website, promoter, etc.)

Another object of the invention is to give on-trade establishments the opportunity to sell whatever quantity of a certain product they may want to sell, and free them of the burden of being controlled by their personal stock/inventory levels.

Another object of the invention is to provide tourists with the possibility to have shipped to their home a specific product that they have tried and enjoyed during their travels, and cannot find in their native country.
A further object of the invention is to provide consumer data to interested parties.

Other objects and advantages of the present invention will become apparent from the following descriptions, taken in connection with the accompanying drawings, wherein, by way of illustration and example, an embodiment of the present invention is disclosed.

In accordance with the preferred embodiment of the invention, an ordering process linking products tried or discovered in a real world setting with both an Internet and real world buying solution comprises a coding system, a label or other identification system for the coding system, an Internet site and/or database and/or a mobile communication device, and/or a fax, and/or a telephone, and/or an order form. The coding system identifies, through one or more references (= the CODE), the product and possibly the product price, inventory holder, retailer and/or other interested parties. The label can be detachable or non-detachable from the product and is equipped with the CODE linking it to the Internet site and /or the order form and/or the telephone, and/or the fax. The order form can also be made available at the retail establishment, thus giving consumers an immediate buying opportunity. The Internet site and/or database is designed to provide a purchasing opportunity for the consumer once the product CODE is entered; the web site and/or database processes the information thus ensuring that the designated profit sharing is allocated to the beneficiaries of the scheme and that the goods are delivered to the client. A mobile device may be used for entering the order on the Internet. A telephone call may be used in connection with the CODE to place an order. Similarly, a fax may be sent to order the product using the CODE.
Furthermore, orders may be placed in connection with the CODE via the Post.

The drawings constitute a part of this specification and include exemplary embodiments to the invention, which may be embodied in various forms. It is to be understood that in some instances various aspects of the invention may be shown exaggerated or enlarged to facilitate an understanding of the invention.

### Brief Description of the Drawings

Figure 1: is a flow chart of the operations that comprise the method
Figure 2: is a plan view of the label coding system

### Detailed Description of the Preferred Embodiments

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

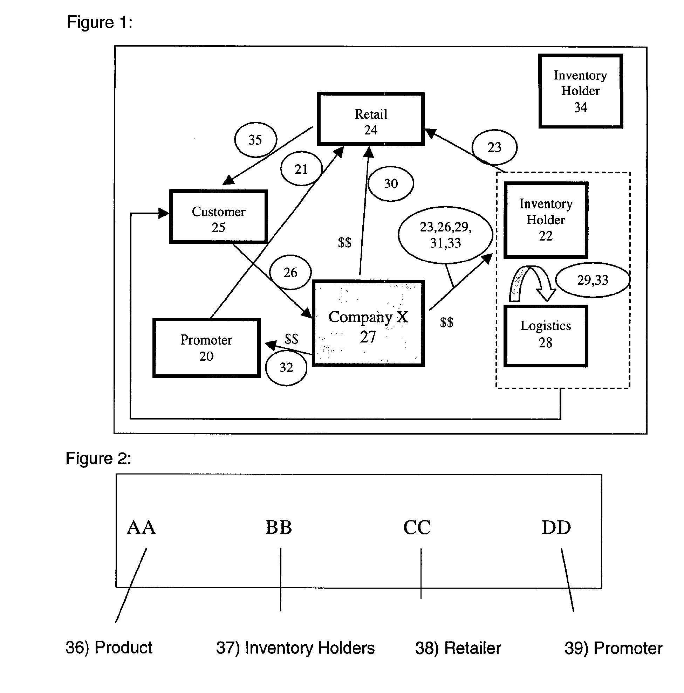

In accordance with the present invention, Figure **1** shows the operations that comprise the ordering process. The promoter **20** convinces the retailer to add the CODE to products sold or tasted in his environment **21.** The inventory holder **22** gives the product an identity CODE **23** so that it is identifiable at the retail **24.** The customer **25** tries the wine **35** and orders product **26** via Company X **27** Internet site, fax, telephone, mobile device, or written order slip using the coding system in Figure **2** (=the CODE). The order is then shipped to the customer by a third party logistics **28** provider **29.** There is a predetermined percentage of the profit given at this point to the retailer **30.** There is a predetermined percentage of the profit given at this point to the inventory holder **31.** There is a predetermined percentage of the profit given at this point to the promoter **32.** The customer could re-order **33** via Company X Internet site, fax, telephone, mobile device or written order slip and all concerned players will automatically be allocated their share of the profit. Multiple inventory holders **34** can be involved using the same methodology. Turning now to Figure 2 a detailed description is given of the label coding system. The product is represented by a two digit or more letter or numerical CODE **36**. The inventory holder is represented by a two digit or more letter or numerical CODE **37**. The retailer is represented by a two digit or more letter or numerical CODE **38**. The promoter is represented by a two digit or more letter or numerical CODE **39**:

Following the preferred procedure an ordering process linking products tried or discovered in a real world setting with both an Internet and real world buying solution is achieved.

In like manner, attention may now be given to the fact that this is the only process of its kind that allows consumers the opportunity to try the fragmented product (for example a good wine) before purchasing it. This is achieved by providing a CODE (for instance on a detachable label indicating the web site address, telephone number, Company X address, fax number, where the product can be ordered) at the time the consumer is interested in buying while in a setting where purchase is not immediately possible (for example on an airplane during a transatlantic flight). This CODE also gives the consumer the possibility to purchase a product for home consumption that was previously not available due to limited stock (for example, six bottles of the same wine that the consumer has just enjoyed with their dinner at their favorite restaurant). The CODE gives the consumer the opportunity to easily place their order at a later time. This order can either be placed via a convenient Internet website, which is the central clearing system, and/or by telephone, and/or by fax and/or by mobile device and/or directly at the retail establishment and/or by Post. The Internet website and/or database will process the consumer order once he or another party (this party may be a calling center employee, or an employee of Company X) has entered the CODE and provided payment and delivery details. Moreover, the process links the real world with the Internet world, and allows the flow of commerce between them.

Turning first to Figure 1: a flow chart of the operations that comprise the method there is shown that the product is given an identification CODE. The consumer is identifying the product in a normal retail channel, such as a hotel, restaurant, disco, airplane, wine bar, cigar bar, etc. For example, a consumer may try a new wine while dining in a restaurant or hotel. After consuming the wine; Company X offers the consumer the possibility to purchase the same wine for home consumption. Through the coding system, Company X designates the wine type and/or restaurant and/or distributor and/or promoter. Using either a mobile phone, fax, in restaurant order form, or the internet the customer places their order.

Similarly, various external marketing efforts could be used, such as a product promotion on the package of a food stuff, or via commercial mailing, or in normal media, such as a magazine or newspaper. Furthermore, consumers may try or become familiar with a product through previous customers, such as during a dinner party where the host serves a bottle of Company X wine.

From the proceeds of the sale, there can be a predetermined percentage of the profit allocated to the retailer. There can be another predetermined percentage of the profit allocated to the inventory holder. Similarly there can also be a predetermined percentage of the profit allocated to other players in the value chain including promoters (a promoter is someone who contributes to market penetration of this business method). Any of the various players in the value chain (= the players) may also be compensated according to his/her marketing efforts for the product or the method, similar to other multilevel marketing practices where each member of the chain benefits from the sales of the people they have signed up.

The consumer could re-order via "Company X" web site, fax, telephone, mail order form, or mobile device and all concerned players will be allocated their share of the profit. This makes it a delayed method for handling one customer without any interaction with any players of the value chain except "Company X". The consumer could also send email referrals to his friends encouraging them to buy the product he has identified. This would allow the players to generate additional income from clients who do not even know about them and at the same time benefit from the publicity derived from the customer referrals. It is important to note that multiple inventory holders, retailers or other players may be involved using the same methodology and/or website, and/or database.

Turning now to Figure 2: a plan view of the label coding system there is shown a sample CODE which may include the product, and/or inventory holder, and/or retailer, and/or promoters. The CODE may be fixed to the product in the form of an detachable or non-detachable label. Similarly, either the retailer's or Company X's business card or other form of identification may be used in conjunction with the CODE to facilitate customer orders at a later, and perhaps different place in time.

Patently important, the ordering process provides consumers with a more efficient way to purchase goods. This process also makes available to consumers products that are not available for home consumption. It is seen that the process provides a new sales channel to retailers and distributors. It could provide a more efficient inventory control system and can be used to provide helpful consumer data to interested players. In addition, it can handle the profit sharing scheme agreed upon by the various parties. Furthermore, it provides a new one-to-one marketing opportunity to the interested parties. And finally, it gives on-trade retailers the opportunity to sell larger amounts and not be dependent on their own stock levels.

A real world setting is anyplace in the now, at this moment in time.

The on-trade is where the product is purchased and consumed on the premises (i.e. a restaurant).

The off-trade is where the product is purchased and taken elsewhere to consume (i.e. a grocery store).

A fragmented product is one that exists in many different variations and is produced by many different sources (i.e. wine).

A promoter is any person or organization which contributes to the implementation of the "Company X" program (i.e. a food salesperson selling products to restaurants).

While the invention has been described in connection with a preferred embodiment, it is not intended to limit the scope of the invention to the particular form set forth, but on the contrary, it is intended to cover such alternatives, modifications, and equivalents as may be included within the spirit and scope of the invention as defined by the appended claims.

## Claims

1. An ordering process linking products tried or identified in a real world setting with both an Internet and real world buying solution, said process comprising:
A coding system identifying product, inventory holder, retailer and /or promoter.
An order form made available at the retail establishment giving consumers an immediate buying opportunity,
An Internet site designed to accept the said product code and process the information in order to ensure designated profit sharing and goods delivery,
A label which is detachable or non-detachable from product, said label equipped with said code linking said Internet site and said order form, and
A mobile device, which can be used to order, said product using said code and said Internet site.

2. An ordering process linking products tried or identified in a real world setting with both an Internet and real world buying solution, said process comprising:
A coding system identifying the product. This CODE would allow the website to identify all players who are entitled to profit sharing once the sale is made.
An order form made available at the retail establishment giving consumers an immediate buying opportunity,
An Internet site designed to accept the said product code and process the information in order to ensure designated profit sharing and goods delivery,
A label which is detachable or non-detachable from product, said label equipped with said code linking said Internet site and said order form, and
A mobile device, which can be used to order, said product using said code and said Internet site.

3. An ordering process linking products tried or identified in a real world setting with both an Internet and real world buying solution, said process comprising:
A coding system identifying product, inventory holder and retailer,
An order form made available at the retail establishment giving consumers an immediate buying opportunity,
An Internet site designed to accept the said product code and process the information in order to ensure designated profit sharing and goods delivery,
A label which is detachable or non-detachable from product, said label equipped with said code linking said Internet site and said order form, and
A mobile device, which can be used to order, said product using said code and possibly said Internet site.

4. An ordering process linking products tried or identified in a real-world setting with both an Internet and real world buying solution, said process comprising:
A coding system identifying product,
An order form made available at the retail establishment giving consumers an immediate buying opportunity (the order form is to be mailed or faxed to the clearing website)
An Internet site designed to accept the said product code and process the information in order to ensure designated profit sharing and goods delivery,
A label which is detachable or non-detachable from product, said label equipped with said code linking said Internet site and said order form, and

5. An ordering process linking products tried or identified in a real world setting with both an Internet and real world buying solution, said process comprising:
a coding system identifying product,
an Internet site designed to accept the said product code and process the information in order to ensure designated profit sharing and goods delivery, and
A label which is detachable or non-detachable from product, said label equipped with said code linking said Internet site and said order form.
